Europäisches Patentamt

**European Patent Office**

Office européen des brevets

(19)

(11) Numéro de publication : **0 153 209**
**B1**

(12)

# FASCICULE DE BREVET EUROPÉEN

(45) Date de publication du fascicule du brevet :
**11.01.89**

(21) Numéro de dépôt : **85400117.9**

(22) Date de dépôt : **24.01.85**

(51) Int. Cl.⁴ : **C 08 F220/18**, C 10 M145/14 //
(C08F220/18, 220:18, 220:14)

(54) **Nouveaux polymères de type polyméthacrylate, utilisation de ces nouveaux polymères de type polyméthacrylate comme additifs polyfonctionnels d'huiles lubrifiantes et procédé de préparation de tels polymères de type polyméthacrylate.**

(30) Priorité : **30.01.84 ES 529287**

(43) Date de publication de la demande :
**28.08.85 Bulletin 85/35**

(45) Mention de la délivrance du brevet :
**11.01.89 Bulletin 89/02**

(84) Etats contractants désignés :
**BE DE FR GB IT**

(56) Documents cités :
FR--A-- 1 302 679
FR--A-- 2 435 486
GB--A-- 1 001 474

(73) Titulaire : **REPSOL PETROLEO S.A.**
**José Abascal, No 4**
**28003 Madrid (ES)**

(72) Inventeur : **Delgado Oyague, Juan Antonio**
**Avda. de Burgos 30**
**Madrid (ES)**
Inventeur : **Nuevo Gonzalez, Amando**
**Plaza de las Méninas 3**
**Madrid (ES)**
Inventeur : **Hernandez-Vaquero Espinosa, Mariano**
**Sacramento 10**
**Madrid (ES)**

(74) Mandataire : **Durand, Yves Armand Louis et al**
**CABINET WEINSTEIN 20, Avenue de Friedland**
**F-75008 Paris (FR)**

Jouve, 18, rue St-Denis, 75001 Paris, France

EP 0 153 209 B1

## Description

La présente invention concerne de nouveaux polymères du type polyméthacrylate, leur utilisation comme additifs polyfonctionnels d'huiles lubrifiantes et un procédé de préparation de tels nouveaux polymères.

Les nouveaux polymères selon l'invention de type polyméthacrylate sont de préférence utilisés comme additifs polyfonctionnels d'huiles lubrifiantes de sorte que par addition en petites quantités à des huiles minérales ils améliorent l'indice de viscosité, augmentent la viscosité et diminuent le point de congélation desdites huiles.

Il est connu que les additifs commerciaux du type des polyacrylates ou polyméthacrylates, s'obtiennent par polymérisation des esters correspondants des acides acrylique ou méthacrylique, ou par copolymérisation de ces composés avec d'autres monomères. Ces esters d'acides acrylique et méthacrylique s'obtiennent par transestérification avec des alcools supérieurs des esters méthylique ou éthylique correspondants ou bien par estérification des acides acrylique ou méthacrylique avec les alcools cités.

Pour assurer la solubilité dans des huiles minérales de ces polymères il est nécessaire d'utiliser dans la synthèse des acrylates ou méthacrylates avec un nombre d'atomes de carbone moyen dans la chaîne alcoylique au minimum égal à 7. Ainsi, il est connu que les polyméthacrylates qui possèdent dans leurs chaînes alcoyliques un nombre moyen d'atomes de carbone compris entre 7 et 12 possèdent des propriétés améliorées d'indice de viscosité d'huiles minérales. D'autre part, les méthacrylates d'alcoyle dont les restes alcoyliques possèdent plus de 12 atomes de carbone produisent des polymères ayant des propriétés dépréciées ou diminuées du point de congélation des huiles minérales (Revue de l'Institut Français du Pétrole, Avril 1956, page 537).

Les inventeurs ont maintenant découvert de nouveaux polymères méthacryliques ou polymères du type polyméthacrylate qui possèdent simultanément des propriétés épaississantes, et qui sont des améliorateurs d'indice de viscosité et des dépresseurs ou des composés d'abaissement du point de congélation des huiles minérales.

Ces nouveaux polymères selon l'invention sont caractérisés en ce qu'ils sont obtenus en copolymérisant un mélange de : (I) un méthacrylate ou un mélange de méthacrylates avec un nombre moyen de 12-20 atomes de carbone dans leurs chaînes alcoyliques, (II) un méthacrylate ou un mélange de méthacrylates ayant un nombre moyen d'atomes de carbone dans la chaîne alcoylique compris entre 4 et 10 et (III) un méthacrylate de méthyle.

La proportion des monomères dans le copolymère doit être incluse dans l'intervalle suivant pour aboutir aux copolymères les plus efficaces I : 20-75 %, II : 75-10 % et III : 2-20 %, tous les pourcentages étant donnés en poids dans la description, sauf indication contraire.

La présente invention concerne également, l'utilisation de ces nouveaux polymères méthacryliques ou de type polyméthacrylate comme additifs polyfonctionnels d'huiles lubrifiantes.

La présente invention concerne également un procédé pour préparer ces nouveaux polymères méthacryliques qui, selon le mode de réalisation préféré pour préparer l'additif, est caractérisé en ce qu'il comprend la copolymérisation dans une dissolution dans une huile minérale du mélange précité d'esters d'acide méthacrylique dans les proportions indiquées précédemment, à des températures comprises entre 50-130 °C en présence d'un initiateur de polymérisation radicalaire.

Il est connu que les peroxydes organiques et leurs composés azo s'utilisent largement comme initiateurs de réactions de polymérisation radicalaires. Il s'agit de composés qui se décomposent thermiquement en générant des radicaux libres qui initient les réactions de polymérisation.

Pour réaliser le procédé objet de la présente invention, n'importe quel type d'initiateur de polymérisation radicalaire est adéquat en principe dans la mesure où il se décompose de manière appréciable aux températures du procédé, c'est-à-dire entre 50-130 °C. Parmi les composés adéquats dans la marche de l'invention on peut citer le peroxyde de dibenzoyle, le peroxyde de dipropionyle, le peroxyde de dilauryle, l'azo-bis-isobutyronitrile, le tert-butylperoxyhexanoate, etc.

On choisit la quantité d'initiateur à utiliser dans le procédé de polymérisation de manière qu'on aboutisse à des taux de conversion des monomères dans le copolymère supérieurs à 90 % et de préférence supérieurs à 95 %. La quantité optimum dans chaque cas dépend des conditions choisies pour la polymérisation et pourra se déterminer avec facilité par tout expert en la matière. Néanmoins, la quantité normalement nécessaire pour aboutir aux taux de conversion indiqués est comprise entre 0,1-1 % en poids d'initiateur par rapport à la masse totale des réactifs.

Comme cela a été indiqué précédemment, on réalise la polymérisation de préférence au sein d'une huile minérale qui agit comme solvant. De cette manière on obtient des dissolutions de polyméthacrylates dans une huile minérale que l'on peut manier avec facilité due à sa viscosité inférieure et que l'on peut utiliser directement dans la formulation d'huiles à cause de leur facile miscibilité avec ceux-ci. De manière évidente, les copolymères objets de la présente invention peuvent se préparer au moyen d'une polymérisation au sein d'un solvant conventionnel de type benzène, toluène, xylène, cyclohexane, etc. Cependant, cette manière de préparation n'est pas préférée dans la marche de l'invention étant donné qu'elle présente la nécessité d'éliminer le solvant de polymérisation avant l'utilisation des copolymères comme additifs. Cette opération est indésirable et coûteuse dans la pratique indus-

trielle.

De manière évidente, la quantité optimum de solvant ou encore de préférence d'huile minérale à utiliser sera la quantité minimum pour réduire la viscosité de la masse de réaction jusqu'à des limites acceptables pour aboutir à une bonne agitation dans le réacteur de polymérisation et qui permette une manipulation facile du produit final et un mélange facile avec les huiles lubrifiantes dans lesquelles on doit ajouter le produit sous forme d'additif. Normalement ceci peut être réalisé en utilisant 1 huile minérale dans des concentrations de 25-75 % en poids, de préférence 40-60 % en poids.

D'autres buts, caractéristiques et avantages de l'invention apparaîtront clairement à l'aide des exemples suivants donnés simplement à titre d'illustration et qui ne sauraient donc en aucune façon limiter la portée de l'invention.

Exemple 1

Dans un matras à 4 bouches pourvu d'un agitateur, d'un thermomètre, d'un réfrigérant de reflux et d'un tube pour l'entrée de l'azote, on introduit 100 grammes d'une huile lubrifiante, de viscosité Engler à 50 °C égale à 2,2 et 100 grammes d'un mélange constitué par : I : 40 % de méthacrylate de cétyle, II : 48 % de méthacrylate d'octyle et III : 12 % en poids de méthacrylate de méthyle.

On élimine l'air du matras au moyen d'un courant d'azote et on chauffe le mélange jusqu'à une température de 100 °C. A cette température on ajoute 1 gramme de peroxyde de dibenzoyle, en maintenant le mélange sous agitation pendant 2 heures à cette température. A la fin de ce temps on a polymérisé 97 % des monomères initiaux.

On utilise le polymère de l'invention ainsi obtenu comme additif en le mélangeant en une proportion de 2 % à une huile minérale paraffinique (viscosité à 100 °C = 4,20 cSt. I. V. = 96, point de congélation — 12 °C).

L'huile ainsi additionnée possède un indice de viscosité égal à 138 et un point de congélation égal à — 40 °C avec un pourcentage de perte de viscosité au cisaillement de 9,2 % (30 cycles en injecteur Bosch).

Exemple 2

Dans un réacteur de 600 litres de capacité doté d'un système d'agitation on introduit 226 kilogrammes d'un mélange de méthacrylates constitué par I : 35 % d'un mélange de méthacrylates d'hexadécyle et d'octadécyle, II : 50 % de méthacrylate d'octyle et III : 9,5 % de méthacrylate de méthyle, et 226 kilogrammes d'une huile minérale lubrifiante (viscosité à 50 °C = 2,2° E.).

On chauffe le mélange sous agitation jusqu'à 125 °C tandis qu'on laisse passer un courant d'azote pour déloger l'air du réacteur. A la température indiquée on ajoute 2,5 kilogrammes de peroxyde de dibenzoyle, tandis qu'on réfrigère le réacteur au moyen d'une chemise pour éliminer la chaleur de réaction. On maintient le mélange sous agitation pendant 104 minutes à 125-130 °C et on considère que la réaction est terminée, on refroidit et on décharge le réacteur. Dans le produit final 94,5 % des monomères initiaux a été polymérisé.

Le polymère selon l'invention ainsi obtenu est utilisé comme additif polyfonctionnel d'huiles lubrifiantes et on le mélange ainsi en une proportion de 6 % à une huile minérale (viscosité à 100 °C = 4,17 cSt*, I. V. 98) en obtenant une huile avec une viscosité à 100 °C de 7,54 cSt*, indice de viscosité 180 et une proportion de pertes de viscosité par cisaillement (30 cycles dans des injecteurs Bosch) de 13,5 %.

* 1cSt = $10^{-6}$ m²/s

**Revendications**

1. Nouveaux polymères méthacryliques ou du type polyméthacrylate, caractérisés en ce qu'ils sont obtenus par copolymérisation d'un mélange de :

(I) : un méthacrylate ou un mélange de méthacrylates ayant un nombre moyen de 12-20 atomes de carbone dans la chaîne alcoylique ;

(II) : un méthacrylate ou un mélange de méthacrylates ayant un nombre moyen d'atomes de carbone dans leurs chaînes alcoyliques compris entre 4 et 10 ; et

(III) : du méthacrylate de méthyle.

2. Nouveaux polymères selon la revendication 1, caractérisés en ce qu'ils sont obtenus en copolymérisant les monomères précités dans les proportions suivantes, en pourcentage en poids : I : 20-75 %, II : 75-10 % et III : 2-20 %.

3. Utilisation des nouveaux polymères méthacryliques ou du type polyméthacrylate tels que définis à la revendication 1 ou 2 comme additifs polyfonctionnels d'huiles lubrifiantes.

4. Procédé d'obtention de polymères méthacryliques ou du type polyméthacrylate utilisables comme additifs polyfonctionnels d'huiles lubrifiantes, caractérisé en ce qu'on copolymérise à une température de 50-130 °C en présence d'un initiateur de polymérisation radicalaire, un mélange de méthacrylates constitué par : 20-75 % en poids d'un méthacrylate ou de mélanges de méthacrylates dont les chaînes alcoyliques possèdent un nombre moyen d'atomes de carbone compris entre 12-20 ; 75-10 % en poids d'un méthacrylate ou de mélanges de méthacrylates qui possèdent des chaînes alcoyliques avec un nombre moyen d'atomes de carbone compris entre 4 et 10 ; et 2-20 % en poids de méthacrylate de méthyle.

5. Procédé selon la revendication 4, caractérisé en ce qu'on réalise la copolymérisation en dissolution dans une huile minérale, avec une concentration de celle-ci de 27-75 % en poids et de préférence entre 40-60 % en poids.

6. Procédé selon la revendication 4 ou 5, caractérisé en ce qu'on utilise comme initiateur de réaction de polymérisation du peroxyde de benzoyle en quantités comprises entre approximativement 0,1 et 1 % en poids par rapport au poids total des réactifs.

7. Procédé selon la revendication 4 ou 5, caractérisé en ce qu'on utilise comme initiateur de réaction de polymérisation du tert-butyl-peroxyhexanoate en quantités comprises approximativement entre 0,1 et 1 % en poids par rapport au poids total des réactifs.

## Claims

1. Novel methacrylic polymers or of the polymethacrylate type, characterized in that they are obtained by copolymerizing a mixture of :

(I) : a methacrylate or a mixture of methacrylates having an average number of 12-20 carbon atoms in the alkyl chain ;

(II) : a methacrylate or a mixture of methacrylates having an average carbon atom number in their alkyl chains comprised between 4 and 10 ;

and (III) : methyl methacrylate.

2. Novel polymers according to claim 1, characterized in that they are obtained by copolymerizing the aforesaid monomers in the following weight percent proportions : I : 20-75 %, II : 75-10 % and III : 2-20 %.

3. Use of the novel methacrylic polymers or of the polymethacrylate type such as defined in claim 1 or 2 as polyfunctional additives for lubricating oils.

4. Process for obtaining methacrylic polymers or of the polymethacrylate type useful as polyfunctional additives for lubricating oils, characterized in that a methacrylate mixture formed of : 20-75 weight % of a methacrylate or of mixtures of methacrylates the alkyl chains of which have an average carbon atom number comprised between 12 and 20 ; 75-10 weight % of a methacrylate or of mixtures of methacrylates having alkyl chains with an average carbon atom number comprised between 4 and 10 ; and 2-20 weight % of methyl methacrylate is copolymerized at a temperature of 50-130 °C in the presence of a radical polymerization initiator.

5. Process according to claim 4, characterized in that the copolymerization is carried out in the dissolved state in a mineral oil, with a concentration thereof of 27-75 weight % and preferably between 40-60 weight %.

6. Process according to claim 4 or 5, characterized in that benzoyl peroxide in amounts comprised between approximately 0,1 and 1 weight % with respect to the total weight of the reactants is used as a polymerization reaction initiator.

7. Process according to claim 4 or 5, characterized in that tert-butyl-peroxyhexanoate in amounts comprised approximately between 0,1 and 1 weight % with respect to the total weight of the reactants is used as a polymerization reaction initiator.

## Patentansprüche

1. Neue Methacrylic- oder des Polymethacrylatstyps Polymere, dadurch gekennzeichnet, daß sie durch Kopolymerisierung einer Mischung von :

(I) : einem Methacrylat oder einer Mischung von Methacrylaten mit einer durchschnittlichen Kohlenstoffatomzahl in der Alkylkette zwischen 12-20 ;

(II) einem Methacrylat oder einer Mischung von Methacrylaten mit einer durchschnittlichen Kohlenstoffatomzahl in der Alkylkette zwischen 4 und 10 ; und

(III) ; Methylmethacrylat hergestellt werden.

2. Neue Polymere nach Anspruch 1, dadurch gekennzeichnet, daß sie durch Kopolymerisierung der vorgenannten Monomeren in den folgenden Gewichtsprozentsätzen : I : 20-75 %, II : 75-10 % und III : 2-20 %, hergestellt werden.

3. Verwendung der neuen Methacrylic- oder des Polymethacrylatstyps Polymere wie im Anspruch 1 oder 2 definiert, als polyfunktionelle Zusätze for schmierfähige Öle.

4. Verfahren zur Gewinnung von Methacrylic- oder des Polymethacrylatstyps Polymeren verwendbar als polyfunktionelle Zusätze für schmierfähige Öle, dadurch gekennzeichnet, daß man, bei einer Temperatur von 50-130 °C in Anwesenheit von einem radikalären Polymerisierungsinitiator, eine Mischung von Methacrylaten bestehend aus : 20-75 % in Gewicht von einer Methacrylat oder einer Mischung von Methacrylaten mit Alkylketten mit einer durchschnittlichen Kohlenstoffatomzahl zwischen 12-20 ; 75-10 % in Gewicht von einer Methacrylat oder einer Mischung von Methacrylaten mit Alkylketten mit einer durchschnittlichen Kohlenstoffatomzahl zwischen 4 und 10 : und 2-20 % in Gewicht von Methylmethacrylat ; mischpolymerisiert.

5. Verfahren nach Anspruch 4, dadurch gekennzeichnet, daß die Kopolymerisation in Auflösung in einem anorganischen Öl, mit einer Konzentration dieses Öls von 27-75 % in Gewicht und vorzugsweise zwischen 40-60 % in Gewicht, durchgeführt wird.

6. Verfahren nach Anspruch 4 oder 5, dadurch gekennzeichnet, daß als Polymerisationsreaktionsinitiator Benzoylperoxyd in Mengen zwischen ungefähr 0,1 und 1 Gewichtsprozent im Verhältnis zu dem Reagenz-Totalgewicht, verwendet wird.

7. Verfahren nach Anspruch 4 oder 5, dadurch gekennzeichnet, daß als Polymerisationsreaktionsinitiator Tert-Butyl-Peroxyhexanoat in Mengen zwischen ungefähr 0,1 und 1 Gewichtsprozent im Verhältnis zu dem Reagenz-Totalgewicht, verwendet wird.